(19) Europäisches Patentamt
European Patent Office
Office européen des brevets

(11) Publication number: 0 314 479 A1

# (12) EUROPEAN PATENT APPLICATION

(21) Application number: 88310118.0

(22) Date of filing: 27.10.88

(51) Int. Cl.4: F 16 D 59/02
F 16 D 65/20

(30) Priority: 28.10.87 ZA 878074 02.09.88 ZA 886530

(43) Date of publication of application:
03.05.89 Bulletin 89/18

(84) Designated Contracting States:
AT BE CH DE ES FR GB GR IT LI LU NL SE

(71) Applicant: Cook, Eric Johnstone
57 Somerset Street
Ferryvale Nigel Transvaal Province (ZA)

(72) Inventor: Cook, Eric Johnstone
57 Somerset Street
Ferryvale Nigel Transvaal Province (ZA)

(74) Representative: Allen, William Guy Fairfax et al
J.A. KEMP & CO. 14 South Square Gray's Inn
London WC1R 5EU (GB)

## (54) Fail safe braking system.

(57) A vehicle fail safe braking system comprising a mechanical brake applying mechanism adapted to bias a wheel brake to an operative condition and a system for overriding the bias on the brake applying mechanism.

FIG. 1

EP 0 314 479 A1

## Description

# FAIL SAFE BRAKING SYSTEM

THIS INVENTION relates to a braking system, and more particularly to a fail safe braking system for heavy duty vehicles.

## BACKGROUND TO THE INVENTION

It is important that heavy duty vehicles both road and off-road vehicles have safety mechanisms which will become effective should normal wheel braking systems fail. Generally this type of safety mechanism is provided by means of a pneumatic accumulator used to back-up the usual hydraulic system for operation on the wheel brake. Pneumatic accumulator back-up is operative for only as long as the pneumatic storage capacity lasts. Alternatively there have been provided safety brakes which act on the transmission system. These latter have the advantage of requiring less power but have the disadvantage that they lack dynamic capacity and are dependant on non-failure of the entire drive line in order to operate. The entire system normally relies on only one unit without any back-up.

## OBJECT OF THE INVENTION

The object of the present invention is to provide a fail safe braking system which may operate on a plurality of wheels and which may be manually released and reapplied as necessary.

## SUMMARY OF THE INVENTION

In accordance with this invention there is provided a fail safe braking apparatus arranged to be fitted to a vehicle wheel and comprising a first pressure plate which is operable by a hydraulic driving brake mechanism against biasing to move a first friction disc means into braking contact with an opposing friction disc means, a second pressure plate means operable by a mechanical biasing to move a second friction disc means into braking contact with the opposing friction disc means against hydraulic pressure, the mechanical biasing being arranged to so move the second pressure plate when the opposing hydraulic pressure drops below a predetermined minimum pressure.

Features of the invention provide for the mechanical biasing means to be disc springs, for the hydraulic driving brake mechanism to include a first annular hydraulic cylinder, and for the hydraulic pressure opposing the mechanical biasing to be a second annular hydraulic cylinder.

Preferably the disc springs are arranged in axial stacks which are located spaced apart around a pitch circle at the rear of the second pressure plate, and the springs and the second hydraulic cylinder are located on one axial side of the friction discs, and the first hydraulic cylinder on the other.

There is provided for the disc springs to be located substantially within the circumference of the friction discs, with the second annular hydraulic cylinder located therearound.

Preferably the side on the which the disc springs are located is that side which is arranged to be furthest from the hub of a wheel to which the brake is fitted in use.

There is also provided for the second pressure plate to have an annular flange of axially increased thickness with spaced apart axially extending recesses therein located substantially on a pitch circle to receive the stacks of disc springs.

A particular feature of the invention provides for each stack of disc springs to be mounted around a self centering pin secured between a housing and the second pressure plate, there being a loose fit recess in the housing or pressure plate which receives one pin end, and an annular flange recess in the other of the housing or pressure plate, which receives in use an annular flange around the other pin end, the annular flange being arranged to seat in the bottom of the flange recess to axially centre the pin within the recess. The pin end having the annular flange may have a centering stud of reduced diameter protruding beyond the flange, and which is receivable in a co-operating recess concentric to the flange recess.

Preferably the flange recess is in the pressure plate.

Wear indicators are provided for, to be fitted to at least one pressure plate, and comprising measuring strip means mounted relative to the pressure plate and having a mechanical linkage to follow pressure plate movement, and being marked to show disc wear in accordance with such movement. The measuring strip means may comprise axially slidable rods biased into contact with the rear of the pressure plate, and protruding through the pressure plate housing.

There is further provided for the second hydraulic cylinder to be formed between the outer peripheral wall of the pressure plate and the inner annular wall of a part of the apparatus housing, and for the hydraulic driving brake mechanism to include an annular piston in the first pressure plate reciprocable in an annular cylindrical recess in a pressure plate housing.

The apparatus housing is sealed for wet disc operation, and the invention extends to a pin and a stack of disc springs, adapted for use in braking apparatus as defined above. Preferably the first and second friction discs are rotationally stationary relative to their respective pressure plates.

## BRIEF DESCRIPTION OF THE DRAWINGS

A preferred embodiment of the invention is described below by way of example only, and with reference to the accompanying drawings, in which:

Figure 1 is a section through a part of an annular brake apparatus according to the invention;

Figure 2 is a plan view of portion of a pressure plate in accordance with the invention; and,

Figures 3 & 4 are cross-sectional views of the pressure plate of Figure 2.

DETAILED DESCRIPTION OF THE DRAWINGS

As illustrated, a braking system (1) comprises a generally cylindrical housing (2), which houses stationary discs (3) and a first pressure plate (4), operatable axially to urge the friction discs to brake against opposing friction discs (5). On the opposite axial side of the discs, is a second pressure plate (6) operating to bring further stationary discs (3) into braking contact with the friction discs (5). The pressure plate (6) is operated by spring mechanism (7) acting between the rear surface (8) of the pressure plate and the inside surface (9) of housing member (10) which closes off this axial side of the housing (2).

The first pressure plate (4) has an annular piston (12) which is axially reciprocable within an annular cylinder (13) in a housing member (15) which closes off this axial end of the cylindrical housing (2). An annular flat anti-extrusion ring (60) is positioned against the head of the cylinder (13) between a seal (61) and the annular piston (12). The two housing ends (15) and (10) are secured to an annular side section (16) by means of bolts (17). Compression springs (18) are provided spaced apart on a pitch circle around the outer edges of the discs, and act between the first pressure plate (4) and a housing section, to bias the first pressure plate away from braking action on the stationary discs.

The pressure plate (4) and its secondary disc (3) are locked against relative rotation by spaced apart peripheral tabs (not shown) which are located in co-operating recesses as known in the art per se. The plate lugs are arranged to act against these springs, and the housing (16) has grooves to clear the springs.

The second pressure plate (6) has an annular radially outwardly extending flange (20) next to the housing end (10), and the inner cylindrical wall (22) of the housing (2) has a radially inwardly extending flange (23) axially spaced from flange (20) The flanges (20) and (23) and cylindrical walls of the housing and pressure plate form an annular hydraulic cylinder (24).

The disc springs are located within the circumference of the pressure plate (6), and the springs (7) comprise disc springs (26) in a stack, each stack being mounted around an axial pin (27). Stacks of such disc springs and pins are located spaced apart around a pitch circle at the rear of the pressure plate (6), and a spacer (28) is provided around the pin to allow for more or less disc springs to be fitted to the stack.

In particular, the pin (27) is self centering, and the recess (29) in housing (10) by which the outer pin end (30) is received, is a loose fit to allow for a self centering action, guided by an annular flange formation (31) at the other pin end. The flange (31) is seated within a flange recess (32) in the rear of the pressure plate, with the seating surfaces of plate and flange being machined to provide an axial projection of the pin relative to the pressure plate. A centering stud (33) of reduced diameter is provided extending from the flange end of the pin into a suitable recess in the rear of the pressure plate.

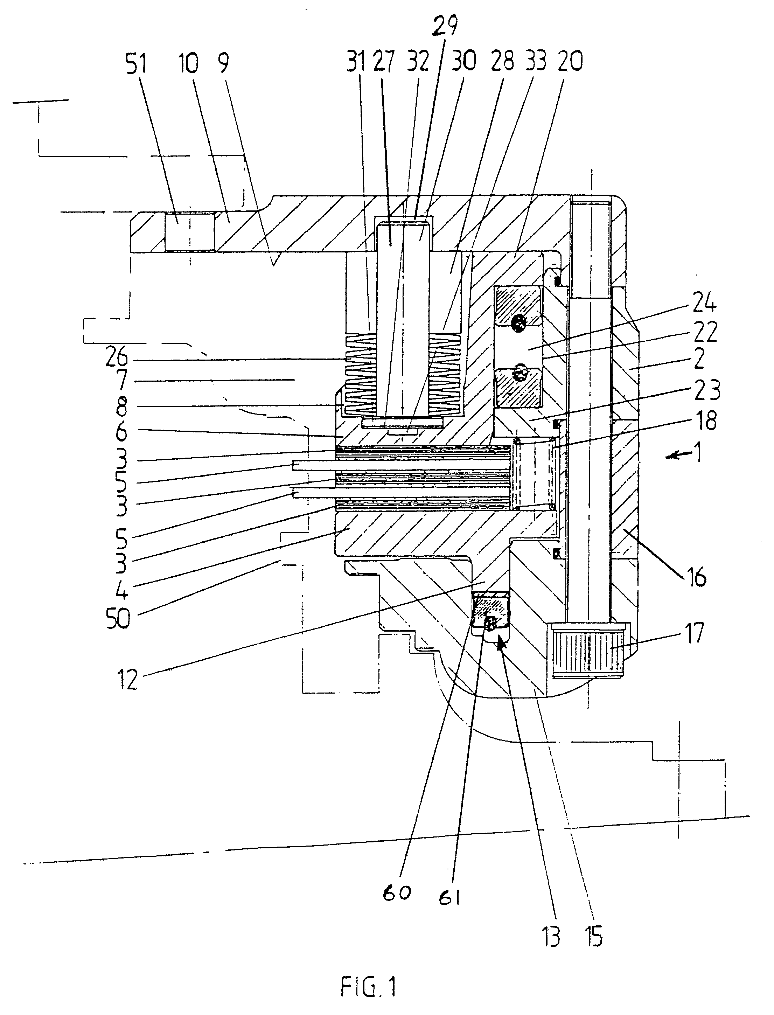

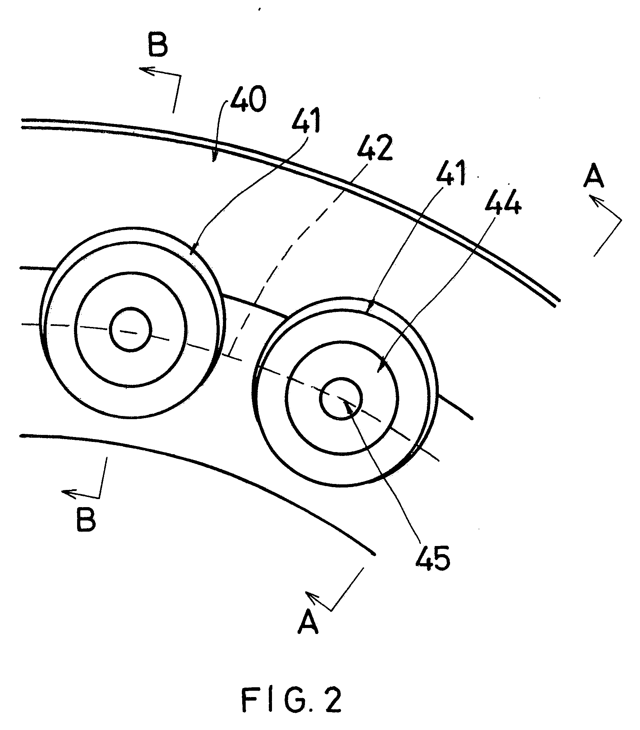

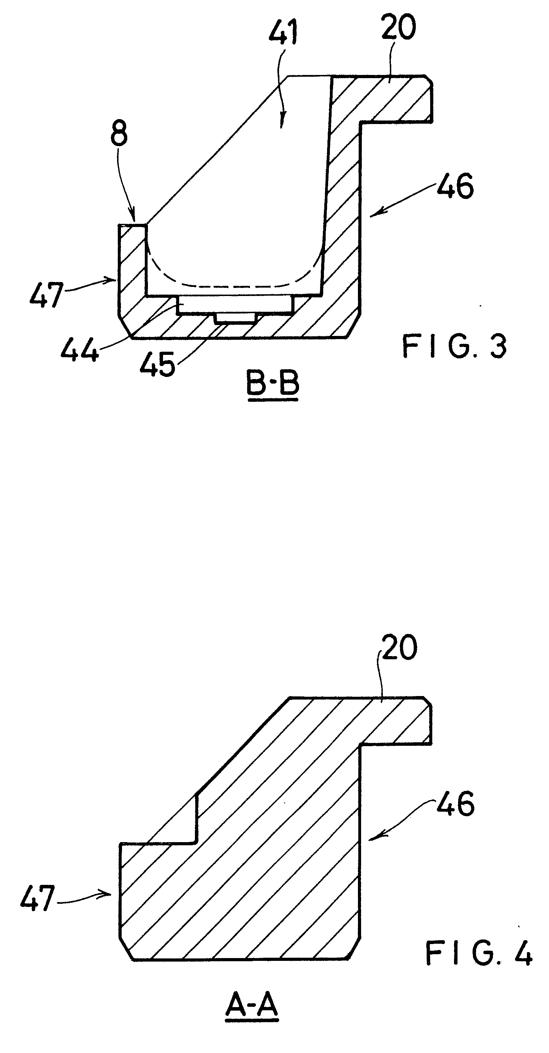

Referring to Figure 2, a part of the pressure plate (6) of Figure 1 is shown in plan view. The rear surface (40) of the pressure plate shows the spaced apart recesses (41), on the pitch circle (42), which receive the disc spring stacks. The recesses (41) house the disc springs in loose fit, with the annular flange recess (44) located in the bottom, concentric with the recess (45) which receives the end stud (33). The pressure plate in section (Figures 3 and 4) has its thickened portion smoothly tapering down at the rear from the full width of the peripheral portion (46), to the width (47) at the interior periphery. Like numerals in Figures 3 and 4 refer to like items referred to in the description of to Figure 2.

In use, the brake is fitted to a wheel hub, shown in Figure 1 in dashed lines (50) by means of a bolt hole (51) through the interior periphery of the housing end (10). The flange (10) can be provided with a variety of multi-purpose shapes at initial casting, and then machined to fit particular applications. It has been found in practice that the brake design of this embodiment is suitable for fitting to a number of vehicle hubs.

The hydraulic piston and cylinder formed between the housing (15) and the pressure plate (4), operates as the driving brake mechanism and driving brake operation feeds hydraulic fluid into the cylinder (13) to cause the pressure plate (4) to urge the stationary discs, against the opposing friction discs (5) to cause braking of the wheels. The return springs (18) serve to bias the driving brake to an off condition.

The extrusion ring (60) provides a back-up to a seal (61) for the hydraulic cylinder (13) by acting against the walls of the cylinders (13). It will be appreciated that this is of importance as piston (12) is not likely to move absolutely linearly within the cylinder and wedging between the piston and cylinder wall may cause extrusion of the normal hydraulic seal with resultant damage to the seal and discharge of the hydraulic fluid.

The fail safe braking mechanism is provided by the stacks of disc springs (26), which urge the second pressure plate (6) to brake the stationary discs against the friction discs (5). The spring discs (26) are held in the off condition by the annular hydraulic cylinder (24) which when pressurized above the required hydraulic pressure keeps the springs compressed and out of the braking position. The hydraulic pressure in the cylinder (24) is connected to the hydraulic pressure of the driving brake system, so that if this pressure drops below a safe minimum, the fail safe brakes will commence operation as the spring pressure overcomes the hydraulic pressure.

In particular, this embodiment of the invention provides a convenient method of fitting such brakes to existing vehicles, since the springs and opposing cylinders are located in a minimal space whilst being placed directly over the area of operation on the friction discs. Also, the pressure plate can be made of a single casting and the location of the stacks of springs in their recesses results in a strong web between the recesses, with good web roundings.

The use of a spring applied and hydraulic release fail safe mechanism in addition to a hydraulic driving brake system, results in comprehensive safety and ease of use. The driving brake operates in conventional manner without requiring new skills to be learned by plant operators, and the fail safe brakes can operate irrespective of the state of any accumulator, and with a vehicle engine stalled.

## Claims

1 A fail safe braking apparatus arranged to be fitted to a vehicle wheel and comprising a first pressure plate which is operable by a hydraulic driving brake mechanism against biasing to move a first friction disc means into braking contact with an opposing friction disc means, a second pressure plate means operable by a mechanical biasing to move a second friction disc means into braking contact with the opposing friction disc means against hydraulic pressure, the mechanical biasing being arranged to so move the second pressure plate when the opposing hydraulic pressure drops below a predetermined minimum pressure.

2 A braking apparatus as claimed in Claim 1 in which the mechanical biasing means are disc springs.

3 A braking apparatus as claimed in Claims 1 or 2 in which the hydraulic driving brake mechanism includes a first annular hydraulic cylinder.

4 Braking apparatus as claimed in Claim 3 in which the hydraulic pressure opposing the mechanical biasing is a second annular hydraulic cylinder.

5 Braking apparatus as claimed in Claim 4 in which the disc springs are arranged in axial stacks which are located spaced apart around a pitch circle at the rear of the second pressure plate, and the springs and the second hydraulic cylinder are located on one axial side of the friction discs, and the first hydraulic cylinder on the other.

6 Braking apparatus as claimed in Claim 5 in which the disc springs are located substantially within the circumference of the friction discs, with the second annular hydraulic cylinder located therearound.

7 Braking apparatus as claimed in Claim 4 or Claim 5 in which the side on the which the disc springs are located is that side which is arranged to be furthest from the hub of a wheel to which the brake is fitted in use.

8 Braking apparatus as claimed in Claim 3 in which the second pressure plate has an annular flange of axially increased thickness with spaced apart axially extending recesses therein located substantially on a pitch circle to receive the stacks of disc springs.

9 Braking apparatus as claimed in Claim 8 in which each stack of disc springs is mounted around a self centering pin secured between a housing and the second pressure plate, there being a loose fit recess in the housing or pressure plate which receives one pin end, and an annular flange recess in the other of the housing or pressure plate, which receives in use an annular flange around the other pin end, the annular flange being arranged to seat in the bottom of the flange recess to axially centre the pin within the recess.

10 Braking apparatus as claimed in Claim 9 in which the pin end having the annular flange has a centering stud of reduced diameter protruding beyond the flange, and which is receivable in a co-operating recess concentric to the flange recess.

11 Braking apparatus as claimed in Claim 10 in which the flange recess is in the pressure plate.

12 Braking apparatus as claimed in Claim 1 in which wear indicators are provided, fitted to at least one pressure plate, and comprising measuring strip means mounted relative to the pressure plate and having a mechanical linkage to follow pressure plate movement, and being marked to show disc wear in accordance with such movement.

13 Braking apparatus as claimed in Claim 12 in which the measuring strip means comprise axially slidable rods biased into contact with the rear of the pressure plate, and protruding through the pressure plate housing.

14 Braking apparatus as claimed in Claim 1 in which the second hydraulic cylinder is formed between the outer peripheral wall of the pressure plate and the inner annular wall of a part of the apparatus housing.

15 Braking apparatus as claimed Claim 1 in which the hydraulic driving brake mechanism includes an annular piston in the first pressure plate reciprocable in an annular cylindrical recess in a pressure plate housing.

16 Braking apparatus as claimed Claim 1 in which the apparatus housing is sealed for wet disc operation.

29
51
10
9
31
27
32
30
28
33
20
24
22
2
26
7
8
6
3
55
3
5
3
4
50
12
23
18
1
16
17
60
61
13
15

FIG.1

B
40
41
42
41
A
44
B
45
A

FIG. 2

41
20
8
46
47
44
45

FIG. 3

B-B

20
46
47

FIG. 4

A-A

European Patent Office

# EUROPEAN SEARCH REPORT

Application Number

EP 88 31 0118

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X<br>Y | US-A-4 172 511 (KHUNTIA et al.)<br>* whole document * | 1, 3, 4, 8, 15<br>5 | F 16 D 59/02<br>F 16 D 65/20 |
| Y<br>A | DE-B-1 269 426 (BERGISCHE STAHL INDUSTRIE)<br>* figure * | 5<br>2, 9, 11 | |
| X | US-A-4 263 991 (MORGAN et al.)<br>* column 2, lines 19 - 22 * | 16 | |
| A | GB-A-1 430 628 (CATERPILLAR) | | |
| A | DE-A-3 121 473 (TEVES) | | |

TECHNICAL FIELDS SEARCHED (Int. Cl.3)

F 16 D 59/00
F 16 D 65/00

The present search report has been drawn up for all claims

| Place of search | Date of completion of the search | Examiner |
|---|---|---|
| BERLIN | 11-01-1989 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)